# EUROPÄISCHE PATENTSCHRIFT

(11) **EP 0 374 444 B1**
(45) Veröffentlichungstag und Bekanntmachung des Hinweises auf die Patenterteilung: **23.06.1993**
(21) Anmeldenummer: 89120331.7
(22) Anmeldetag: 03.11.1989
(51) Int. Cl.: H01S 3/0975, H01S 3/134, H05B 41/36, H05B 37/02

(54) **Gasentladungsstreckenanordnung mit einem Oszillator**
Gas discharge device having an oscillator
Dispositif à décharge dans le gaz comprenant un oscillateur

(30) Priorität: 22.12.1988 DE 3843210
(43) Veröffentlichungstag der Anmeldung: 27.06.1990
(73) Patentinhaber: HERFURTH GMBH, D-22761 Hamburg (DE)
(72) Erfinder: Knobbe, Karl Heinz, Ing., D-2087 Ellerbek (DE)

(56) Entgegenhaltungen:
- EP-A- 0 294 488
- DE-A- 3 722 323
- US-A- 4 611 270
- PATENT ABSTRACTS OF JAPAN, Band 11, Nr. 31 (E-475)[2478], 29. Januar 1987; & JP-A-61 198 695 (KOMATSU) 03-09-1986

## Beschreibung

Die Erfindung geht aus von einer Gasentladungsstreckenanordnung, insbesondere Gaslaser, mit einer als selbstschwingender Oszillator ausgebildeten Leistungsstufe, die impulsförmig hochfrequente elektromagnetische Schwingungs-Energie über Elektroden an die Gasentladungsstrecke abgibt und der Speiseenergie von einer nicht konstant gehaltenen Betriebsspannungsquelle zugeführt wird, wobei der Oszillator in Betrieb gesetzt wird durch Steuerimpulse, deren Breite und ggf. Frequenz in Abhängigkeit von einem von der abgegebenen Strahlung bestimmten Meßwert geregelt wird, wobei jedem Steuerimpuls am Anfang ein zusätzlicher Aufsteuerimpuls und am Ende ein zusätzlicher Sperrimpuls überlagert wird. Eine solche Gasentladungsstreckenanordnung ist Gegenstand von DE-A- 3722 323, veröffentlicht am 19.01.89.

So wird durch hochfrequente Entladungen in einem Laser-Gas ein Gaslaser angeregt. Dazu werden Elektroden außen auf ein Resonator-Rohr, z.B. aus Glas, aufgebracht und an den Hochfrequenz-Oszillator angeschlossen. Die Frequenz kann an sich beliebig sein; es hat sich jedoch gezeigt, daß höhere Frequenzen, wie z.B. 13,56 MHz oder 27,12 MHz, optimal sind, weil die an die Elektroden anzulegenden Spannungen mit zunehmender Frequenz abnehmen.

Die optimalen Bedingungen für die Gasentladung, z.B. für einen Laser, hängen u.a. von der Gaszusammensetzung, vom Druck und von den Temperatur des durch die Entladung angeregten Plasmas ab. Es ist daher erforderlich, die zugeführte hochfrequente Leistung weitgehend konstant zu halten.

Um die erforderliche Ionisation zum Herstellen des Plasmas in dem Gas sicherzustellen, ist eine Mindestfeldstärke des Wechselfeldes im Entladungsraum zwischen den Elektroden erforderlich, und zur Aufrechterhaltung des Plasmas muß die Leistungszufuhr einen Mindestwert überschreiten. Will man eine kleinere mittlere Ausgangsleistung erhalten, so muß die Entladungsstrecke gepulst betrieben wenden, d.h., daß Intenvalle mit die erwähnte Mindestleistung überschreitender Leistung abwechseln mit Intervallen, in denen die Gasentladungsstrecke nicht angeregt wird. Dazu kann der Oszillator gepulst betrieben wenden. Ein solcher Oszillator bestand bisher aus einem Hochfrequenz-Leistungsverstärker mit einem vongeschalteten Impuls-Modulator. Solche Verstärken sind meist mehrstufig und verhältnismäßig teuer.

Dadurch daß den von einer nicht konstant gehaltenen Betriebsspannung gespeiste Oszillator selbstschwingend ausgebildet ist und in Betrieb gesetzt wird durch Steuerimpulse, deren Breite und ggf. Frequenz den Energie-Impulse geregelt wird, erhält man im Prinzip einen einfachen und billigen Aufbau und Leichte Bedienbarkeit.

Ein selbstschwingender Oszillator benötigt in den Regel eine gewisse Zeit, bis er seine volle Amplitude erreicht hat, und auch beim Abschalten kann ein gewisses Ausschwingen auftreten. Für eine exakte Regelung, insbesondere auch gegenüber schnelleren Schwankungen der Betriebsspannungsquelle, ist es jedoch erwünscht, daß den Oszillator mit den Flanken der Steuerimpulse exakt ein- bzw. ausgeschaltet werden kann, also praktisch sofort seine volle Leistung erreicht bzw. zu schwingen aufhört. Dafür wird jedem Steuerimpuls an Anfang ein zusätzlicher Aufsteuerimpuls und am Ende ein zusätzlichen Sperrimpuls überlagert. Dann können insbesondere auch schnellere Schwankungen, wie sie bei einer vom Wechselstromnetz gespeisten Betriebsspannungsquelle auftreten können, sofort ausgeregelt wenden; ein stabiler Betriebszustand bleibt somit sicher erhalten.

Normalerweise sind die Schwingungen eines selbsterregten Oszillators von der Betriebsspannung stark abhängig, so daß diese Betriebsspannung kontant gehalten wenden muß, um konstante Betriebsbedingungen zu schaffen. Das dafür notwendige Regelsystem erhöht den Gesamtaufwand erheblich. Durch den Verzicht auf eine Stabilisierung den Betriebsspannung und durch die Verwendung eines selbstschwingenden Oszillators sind erheblich weniger aufwendige Schaltelemente erforderlich, wenn die Regelung in Abhängigkeit von dem von den abgegebenen Strahlung abhängigen Meßwert erfolgt, wobei auch Einflüsse der Betriebsspannungsquelle in die Regelung mit einbezogen sind.

Nicht nur allmählich erfolgende, z.B. temperaturabhängige, Veränderungen, sondern auch schnellere Veränderungen, wie sie z.B. durch die Betriebsspannung bedingt sein können, werden so ohne zusätzlichen Aufwand von der Regelung umfaßt, so daß insgesamt ein stabiler Betrieb sichergestellt ist.

In dem gesamten System der Gasentladungsstrecke, insbesondere einem Lasersystem (Plasma und Wirkungsbereich) tritt eine gewisse thermische Trägheit mit einer gegenüber der Puls-Frequenz großen Zeitkonstante auf; dies führt zu einer Integration der diskontinuierlichen Leistungszufuhr an die Gasentladungsstrecke durch die thermischen Wirkungen. Auch wenn ein Betrieb mit voller Leistung, wie sie bei einer kontinuierlichen Schwingungsenzeugung (CW-Betrieb) auftritt, angestrebt wird, ist es zulässig, daß noch Steuerimpulse mit einer kleineren Austastlücke auftreten, mit der Änderungen der Versorgungsspannung ausgeregelt wenden können. Typische Pulszeiten liegen zwischen 30 und 300 µs, und die Pulszeiten liegen zwischen 10 und 90 % einen Impulsperiode. Den Änderungsbereich für die abgegebene Leistung ist somit durch diese Pulszeiten gegeben und beträgt bei dem angegebenen Beispiel 1 : 9.

Den Erfindung liegt die Aufgabe zugrunde, den Änderungs- bzw. Einstellbereich den Oszillatorleistung mit einfachen Mitteln zu vergrößern.

Diese Aufgabe wird gelöst, wenn bei einer Gasentladungsstreckenanordnung der eingangs erwähnten Art im Zusammenhang mit den Breite und ggf. den Frequenz den Steuerimpulse auch die Amplitude den Oszillator-Schwingungen verändert wird.

Dies kann auf einem, von den Steuerimpulsen unabhängigen Schaltungsweg erfolgen, z.B. durch Änderung des Aussteuerbereiches einer Oszillatorröhre. Auch eine diskontinuierliche Veränderung, z.B. durch Umschalten einer Betriebsspannung, ist möglich, da ja die erforderliche kontinuierliche Regelung mit Hilfe der Steuerimpulse sichergestellt ist. Zweckmäßig wird mit zunehmender Breite der Steuerimpulse die Oszillatoramplitude vergrößert. Andererseits kann mit abnehmender Breite der Steuerimpulse die Oszillatoramplitude verkleinert werden.

Wenn so für die kleinste Impulszeit eine bestimmte Oszillatoramplitude abgegeben wird, die einen sicheren Betrieb der Gasentladungsstrecke, insbesondere eines Gaslasers, gewährleistet, Läßt sich die Leistung bei einer Verlängerung der Impulszeit und gleichzeitig einer Vergrößerung der Amplitude den erzeugten Oszillatorschwingungen wesentlich erhöhen über das o.a. Verhältnis von 1 : 9 hinaus.

Dabei kann die Erhöhung der Oszillatoramplitude mit größerer Zeitkonstante, also Langsamer, erfolgen als die Regelung der Breite der Steuerimpulse, wobei etwaige schnellere Änderungen, die nur einen geringeren Leistungsbereich überdecken, mit Hilfe der Steuerimpulse vorgenommen werden können.

Nach einer Ausführungsform kann die Amplitude der Steuerimpulse selbst, insbesondere in einem Amplitudenmodulator, verändert werden, wobei dem Amplitudenmodulator eine Einstellgröße zugeführt werden kann. Die Amplitude kann auch mittels einer die Steuerimpulse übertragenden Verstärkerstufe verändert werden, der die Einstellgröße, z.B. zur Änderung des Verstärkungsfaktors, zugeführt wird. Die Einstellgröße kann dabei von dem strahlungsabhängigen Meßwert abhängig sein.

Eine einfache Lösung ergibt sich, wenn der Meßwert dem Elektroden-Stromkreis entnommen ist. Die Regelung kann noch verbessert werden, wenn gemäß einer speziellen Ausführungsform der Erfindung ein Teil des Meßwertes aus der Speisespannung abgeleitet wird.

Die Regelung kann auf konstante Hochfrequenz-Leistung erfolgen, indem ein von der Hochfrequenz-Leistung abgeleiteter Meßwert gegenüber einem Sollwert konstant gehalten wird. Es kann auch die Hochfrequenz-Leistung gemessen und auf konstante Arbeit (Leistung mal Zeit), vorzugsweise innerhalb jeder Impulsperiode, geregelt werden.

Nach einer anderen Ausführungsform kann die Hochfrequenzspannung an den Elektroden der Gasentladungsstrecke gemessen und dann durch die Regelung konstant gehalten werden. Zweckmäßig kann die Hochfrequenz-Spannung an den Elektroden gemessen und die Spannungs-Zeit-Fläche der Pulse konstant gehalten werden.

Die Leistung im Plasma hängt in den Regel nach einer bestimmten Funktion, z.B. einer quadratischen Funktion, von der Elektrodenspannung bzw. ihrer Änderung ab, wobei mit der Leistungsänderung außerdem die betriebsmäßigen Werte des Plasmas beeinflußt werden. Es ist daher zweckmäßig, bei einer Messung den Elektrodenspannung die Pulslänge nach einer entsprechenden nicht-linearen, z.B. exponentiellen oder einem Potenzgesetz entsprechenden, Funktion zu beeinflussen. Deren Form, insbesondere der Exponent einer Potenz, kann entsprechend eingestellt werden, um die gewünschten Eigenschaften des Plasmas zu stabilisieren.

Nach einer anderen Ausführung den Erfindung kann die Strahlungs-Ausgangsleistung der Gasentladungsstrecke, z.B. eines Lasers, gemessen und konstant gehalten werden.

Vorzugsweise kann die Regelung integrierend ausgebildet werden und so mit einer bestimmten Zeitkonstante einen Mittelwert konstant regeln.

Nach einen vonteilhaften Ausführungsform wird im Bereich jedes Energie-Impulses der Meßwert bestimmt, und die folgenden Energie-Impulse erfahren eine Korrektur durch uswertung dieses Meßwertes. So wird eine Art Vorwärtsregelung erreicht und die Regelgenauigkeit und somit auch die Regelgeschwindigkeit deutlich verbessert.

Der Einstellbereich der Steuerimpulse wird zweckmäßig so gewählt, daß der Bereich der Regelung durch Änderung den Breite der Steuerimpulse so groß ist, daß auch beim Betrieb mit voller Leistungszufuhr an die Gasentladungsstrecke, insbesondere einen Gaslaser, noch Steuerimpulse mit einer kleinen Austastlücke auftreten. Somit ist auch dann noch eine gewisse Regelung entsprechend von Schwankungen der Betriebsspannung od.dgl. möglich und nicht etwa ein unveränderlicher Wert der Ansteuerung erreicht.

Zweckmäßig sind der Oszillator und die Gasentladungsstrecken-Anordnung, z.B. der Laser, im gleichen Gehäuse untergebracht und durch, vorzugsweise abgestimmte, Koppelglieder miteinander verbunden. So wird ein raumsparender Aufbau erreicht, weil dabei die Hochfrequenzverbindung zwischen dem Oszillator und der Gasentladungsstrecke besonders kurz ausgebildet sind und nur platzsparende Koppelglieder die Verbindung herstellen.

Da die Hochfrequenz führenden Teile des Oszillators wie auch die Gasentladungsstrecke selbst Hochfrequenzstörungen erzeugen können, soll nach einer zweckmäßigen Weiterbildung der Erfindung das Gehäuse für die Hochfrequenz-Schwingungen abschirmend ausgebildet sein, so daß weder vom Oszillator noch von der Gasentladungsstrecke nennenswerte Störungen in die Umgebung austreten können.

Die Erfindung wird nachstehend anhand der Zeichnung beispielsweise näher erläutert, und es zeigt:
**Fig.1** in schematischen Darstellung einen selbstschwingenden Oszillator mit angekoppeltem Laserresonator und den Schaltstufen zur Ansteuerung, und
**Fig.2** eine Gittensteuerstufe mit einigen Details.

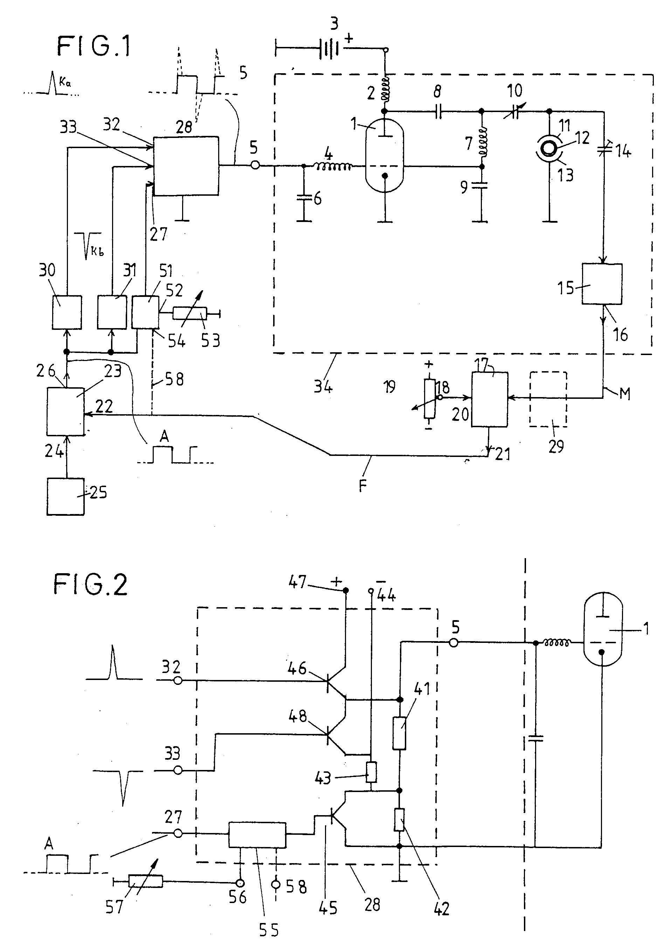

In Fig. 1 ist eine Röhren-Triode 1 über eine Anodendrossel 2 an den positiven Pol + einer Betriebsspannungsquelle 3 angeschlossen, die an ihrer anderen Seite mit Ende verbunden ist. Die Kathode den Röhre 1 liegt ebenfalls an Erde.

Dem Gitter den Röhre 1 werden üben eine Gitterdrossel 4 von einer Steuerklemme 5 steuernde breitenmodulierte Impulse zugeführt. Das von der Röhre 1 abgewandte Ende der Drossel 4 ist über einen Filterkondensator 6 geerdet.

Eine Schwingungskreis-Induktivität 7 ist einerseits über einen Trennkondensator 8 mit den Anode der Röhre 1 und andererseits mit dem Gitter den Röhre 1 verbunden, das über einen Rückkopplungskondensator 9 an Ende angeschaltet ist.

Die Röhre 1 ist so als selbstschwingender Oszillator geschaltet, wobei gewünschtenfalls in an sich bekannter Weise noch ein die Frequenz stabilisierendes Resonanzelement, z.B. ein Schwingquarz, eingeschaltet sein kann.

Über einen, vorzugsweise einstellbaren, Koppelkondensator 10 ist den Verbindungspunkt den Induktivität 7 und des Kondensators 8 an eine Elektrode 11 eines, eine Gasentladungsstrecke bildenden Laserresonators 12 angeschlossen, dessen andere Elektrode 13 an Erde liegt. In dem Resonator 12 wird bei anliegender hochfrequenter Wechselspannung ein Gasplasma angeregt.

Ein Teil der zwischen den Elektroden 11 und 13 auftretenden Hochfrequenzspannung wird über einen, vorzugsweise abgleichbaren, Teilerkondensator 14 einem Demodulator 15 zugeführt. In diesem wird durch Gleichrichtung eine pulsierende Gleichspannung als Meßwert M erhalten, die, ggf. nach Mittelwertbildung über ein integrierendes Glied, vom Ausgang 16 einem Komparator 17 zugeführt wird, in dem die erwähnte Gleichspannung mit einem, vorzugsweise einstellbaren, einen Sollwert darstellenden Festwert verglichen wird, den vom Abgriff 18 eines mit Gleichspannung gespeisten Potentiometers 19 dem Eingang 20 des Komparators 17 zugeführt wird.

Am Ausgang 21 des Komparators 17 tritt bei Abweichungen den Hochfrequenzspannung am Laser 12 vom Sollwert ein Fehlensignal F auf, das dem Steuereingang 22 eines Impulsgenerators 23 zugeführt wird. Den Takteingang 24 des Impulsgenerators 23 ist mit einem Taktgenerator 25 verbunden.

Im Impulsgenerator 23 wenden Ansteuerimpulse A gebildet, deren Breite entsprechend dem Fehlersignal vom Ausgang 21 des Komparators 17 verändert werden kann. Diese in der Breite modulierten Ansteuerimpulse A werden von einem Ausgang 26 dem Eingang 27 einen Gittersteuerstufe 28 zugeführt, deren Ausgang an der Steuerklemme 5 des Oszillators mit der Triode 1 verbunden ist und die rechteckförmige Steuerimpulse S nach dem ausgezogenen Teil der dargestellten Kurve liefert. Die Stufe 51 bleibt zunächst außer Betracht.

Mit dem Koppelkondensator 10 wird die Hochfrequenzspannung an den Elektroden 11,13 für einen optimalen Betrieb des Laserresonators 12 eingestellt. Mit dem Teilerkondensator 14 oder durch Schaltelemente in den Gleichrichterstufe 15 wird die Höhe des durch Gleichrichtung der Hochfrequenzspannung erhaltenen Gleichspannungswertes am Komparator 17 eingestellt bei der entsprechenden Spannungshöhe des Ansteuerimpulses A am Eingang 27 den Gittersteuerstufe 28, die sich bei dem Nennwert der Betriebsspannung von der Quelle 3 ergibt.

Sinkt, z.B. bei Verringerung den Betriebsspannung, die Amplitude des Hochfrequenz-Spannungspulses ab, wird über die dargestellte Regelanordnung mit dem Gleichrichter 15, dem Komparator 17 und dem Impulsgenerator 23 den Ansteuerimpuls A und somit auch der Steuerimpuls S verlängert, und die Impulslücke werden entsprechend verringert, so daß mehr Energie von den Triode 1 an den Laserresonator 12 abgegeben wird und so auch der Mittelwert den Hochfrequenzspannung an den Elektroden 11,13 wieder in Richtung auf den Sollwert vergrößert wird.

Die dem Plasma im Laserresonator 12 zugeführte Leistung hängt nicht-linear von der zwischen den Elektroden 11 und 13 über den Teilenkondensator 14 entnommene und durch Gleichrichtung in der Stufe 15 gemessene Hochfrequenzspannung ab, z.B. nach einem quadratischen Gesetz. Die Gasentladungsstrecke selbst kann zu der nicht-linearen Abhängigkeit infolge ihrer Entladungscharakteristik beitragen. Es kann daher zweckmäßig sein, das Fehlersignal F vom Ausgang 21 dadurch kleiner zu halten, daß der vom Gleichrichter 15 am Ausgang 16 erhaltene Wert über eine Funktionsstufe 29 geführt und dort entsprechend den zu berücksichtigenden nicht-linearen Funktionen verformt wird.

Für die Regelung sind definierte Flanken des von dem selbstschwingenden Oszillator mit den Röhre 1 abgegebenen Hochfrequenz-Pulses erwünscht. Dazu wenden die Ansteuerimpulse A vom Ausgang 26 des Impulsgenerators 23 auch einer ersten und einen zweiten Umformungsstufe 30 und 31 zugeführt. Die erste Umformungsstufe 30 liefert an den Eingang 32 den Gittersteuerstufe 28 einen überhöhten, spitzen Kurzimpuls Ka, der dem am Eingang 27 zugeführten auftastenden Ansteuerimpuls A am Anfang überlagert wird so, daß er das Vestärkerelement, die Triode 1, bis zur maximal möglichen Leistung auftastet. Um auch eine möglichst schnelle Sperrung des Oszillators 1 zu erreichen, wird von der Umformungsstufe 31 an den Eingang 33 den Gittersteuerstufe 28 ein kurzer, spitzer Sperrimpuls Kb überlagert, der die Röhe 1 in kürzester Zeit stromlos macht und so sperrt; es entstehen so Ansteuerimpulse S mit den in Fig. 1 gestrichelt dargestellten Spitzen.

Die hochfrequenzführenden Teile um die Triode 1 und den Laser 12 sind in einem durch die gestrichelte Linie 34 angedeuteten Gehäuse hochfrequenzdicht eingeschlossen, damit nicht störende Felder nach außen dringen können.

Um den Aussteuerbereich der Hochfrequenzleistung des Oszillators 1 zu vergrößern, ist nach der Erfindung in die Verbindung des Ausganges 26 des Impulsgenerators 23 mit dem Eingang 27 den Gittersteuerstufe 28 ein Amplitudenmodulator 51 eingeschaltet; mit diesem kann die Amplitude des dem Eingang 27 zugeführten Ansteuerimpulses A eingestellt werden, z.B. mittels eines, mit einem Eingang 52 des Amplitudenmodulators 51 verbundenen, einstellbaren Widerstandes 53. Mit den Amplitude der Ansteuerimpulse A wird dann auch die Amplitude der erzeugten Oszillatorschwingungen verändert. Die dazu erforderliche Einstellgröße kann dem Eingang 52 auch von einem anderen Schaltelement als dem Einstellwiderstand 53 zugeführt werden. Der Schleifer des Einstellwiderstandes 53 kann ggf. mit dem Abgriff 18 des Potentiometers 19 gekoppelt sein, so daß den Sollwert der Oszillatorschwingungsenergie sowohl über die Breite den Steuerimpulse wie über deren Amplitude eingestellt werden kann.

Insbesondere ist es möglich, die vom Komparator 17 am Ausgang 21 abgegebene Regelgröße F über eine gestrichelt angedeutete Leitung 58 auch einem Eingang 54 des Amplitudenmodulators 51 zuzuführen und so die Regelung, die durch Änderung den Breite den Steuerpulse vorgenommen wird, noch zu verbessern; denn dann wirkt sich der strahlungsabhängige Meßwert auch auf die Regelung der Oszillatoramplitude aus.

Fig. 2 zeigt mit mehr Einzelheiten eine Gittersteuerstufe 28, in der ein zusätzlicher Amplitudenmodulator 55 mit enthalten ist.

Zwischen den mit dem Gitter den Triode 1 verbundenen Klemme 5 und Ende liegt die Reihenschaltung eines ersten und eines zweiten Gitterwiderstandes 41 bzw. 42. Der Abgriffpunkt zwischen beiden Widerständen ist üben einen dritten Gitterwiderstand 43 mit einer negativen Vorspannungsquelle 44 verbunden. Dadurch wird dem zweiten Gitterwiderstand 42 eine negative Sperrspannung zugeführt, die die Röhre 1 stromlos hält. Dem zweiten Gitterwiderstand 42 ist die Kollektor-Emitter-Strecke eines Transistors 45 parallel geschaltet. Wenn diesem von der Klemme 27 die normalen Impulse zugeführt werden, wird diesen Transistor 45 geöffnet und somit den zweite Gitterwiderstand 42 überbrückt. Dann kann die Triode in an sich bekannter Weise selbstschwingend arbeiten.

Beim Einschalten der Steuerimpulse wird von den Klemme 32 weiter ein Transistor 46 stromdurchlässig, mit dem eine Verbindung zwischen einer positiven Vorspannungsquelle 47 zur Gitterleitung den Röhre 1 an den Klemme 5 hergestellt wird. Die Röhre 1 wird dadurch momentan maximal geöffnet, so daß der Oszillator sofort mit voller Amplitude anschwingt.

Der Eingang 33 ist mit der Basis eines Transistors 48 verbunden, dessen Kollektor-Emitter-Strecke bei Ansteuerung durch einen Sperrimpuls eine direkte Verbindung zwischen den negativen Spannungsquelle 44 und der Steuerklemme 5 herstellt. Wenn am Eingang 33 der kurze Sperrimpuls auftritt, wird dann die Röhre 1 momentan sofort stromlos gesteuert, so daß die Hochfrequenzschwingungen unterbrochen wenden.

Durch den dritten Gitterwiderstand 43 zwischen der negativen Speisequelle 44 und Erde wird verhindert, daß ein unzulässiger Strom von den Quelle 44 nach Ende auftritt, wenn der Transistor 45 leitend gesteuert ist.

Außerdem wird dadurch die im Ruhezustand am Widerstand 42 auftretende negative Spannung eingestellt, mit der die Triode 1 stromlos gehalten wird, wenn kein Ansteuerimpuls von den Klemme 27, also in den Impuls-Pausen, auftritt.

Die Amplitude der Ansteuerimpulse A, die den Transistor 45 leitend steuern, wird vom Amplitudenmodulator 55 beeinflußt. Diesem werden an den Klemme 27 die in der Breite modulierten Ansteuerimpulse A vom Generator 23 mit konstanten Amplitude zugeführt. Von einen Klemme 56 wird dem Amplitudenmodulator 55 weiter eine Einstellgröße zugeführt, die seine Verstärkung beeinflußt. In Fig. 2 ist dies durch einen einstellbaren Widerstand 57 angedeutet. Ggf. kann entsprechend der gestrichelten Linie in Fig. 1 von dem Eingang 54 die Regelgröße vom Ausgang 21 des Komparators 17 auch über die Klemme 58 einem weiteren Eingang des Amplitudenmodulators 55 zugeführt werden, so daß die Amplitude auch in Abhängigkeit von den Regelgröße beeinflußt werden kann.

Der Transistor 45 kann einerseits einen bestimmten Wert für den Gitterstrom der Oszillator-Triode 1 im schwingenden Zustand festlegen, er kann aber auch als variablen Widerstand wirken, den dem festen Gitterwidersand 42 parallel liegt und diesen somit in gewünschtem Maße während der Stromflußintervalle verkleinert.

### Bezungszeichenliste

- 1: Röhren - Triode
- 2: Anodendrossel
- 3: Betriebsspannungsquelle
- 4: Gitterdrossel
- 5: Steuerklemme
- 6: Filterkondensator
- 7: Schwingkreis-Induktivität
- 8: Trennkondensator
- 9: Rückkopplungskondensator
- 10: Koppelkondensator
- 11,13: Elektrode
- 12: Laserresonator
- 14: Teilerkondensator
- 15: Demodulator
- 16: Ausgang
- 17: Komparator
- 18: Abgriff
- 19: Potentiometer
- 20: Eingang
- 21: Ausgang
- 22: Steuereingang
- 23: Impulsgenerator
- 24: Takteingang
- 25: Taktgenerator
- 26: Ausgang
- 27: Eingang
- 28: Gittersteuerstufe
- 29: Funktionsstufe
- 30,31: erste, zweite Umformungstufe
- 32,33: Eingang
- 34: Gehäuse
- 41,42,43: erster, zweiter, dritter Gitterwiderstand
- 44: Vorspannungsquelle
- 45,46,48: Transistor
- 47: Vorspannungsquelle
- 51: Amplitudenmodulator
- 52: Eingang
- 53: einstellbarer Widerstand
- 54: Eingang
- 55: Amplitudenmodulator
- 56: Klemme
- 57: einstellbarer Widerstand
- 58: Leitung

## Patentansprüche

1. Gasentladungsstreckenanordnung, insbesondere Gaslaser (12), mit einer als selbstschwingender Oszillator (1) ausgebildeten Leistungsstufe, die impulsförmig hochfrequente elektromagnetische Schwingungs-Energie über Elektroden (11,13) an die Gasentladungsstrecke abgibt und der Speiseenergie von einen nicht konstant gehaltenen Betriebsspannungsquelle (3) zugeführt wird, wobei den Oszillator in Betrieb gesetzt wird durch Steuerimpulse (S), denen Breite und ggf. Frequenz in Abhängigkeit von einem von der abgegebenen Strahlung bestimmten Meßwert (M) geregelt wird, wobei jedem Steuerimpuls (S) am Anfang ein zusätzlicher Aufsteuerimpuls (Ka) und am Ende ein zusätzlicher Sperrimpuls (Kb) überlagert wird und im Zusammenhang mit den Breite und ggf. der Frequenz der Steuerimpulse (S) auch die Amplitude der Osziallator-Schwingungen verändert wird.

2. Anordnung nach Anspruch 1, dadurch gekennzeichnet, daß die Amplitude den Steuerimpulse (S), insbesondere in einem Amplitudenmodulator (55), verändert wird.

3. Anordnung nach Anspruch 2, dadurch gekennzeichnet, daß die Amplitude der Steuerimpulse mittels einer dem Amplitudenmodulator (55) zugeführten Einstellgröße (57) verändert wird.

4. Anordnung nach Anspruch 3, dadurch gekennzeichnet, daß die Amplitude der Steuerimpulse (S) mittels einer die Steuerimpulse übertragenden Verstärkenstufe (55) verändert wird, der die Einstellgröße (57) zugeführt wird.

5. Anordnung nach Anspruch 3 oder 4, dadurch gekennzeichnet, daß die Einstellgröße (57) von dem strahlungsabhängigen Meßwert (M) abhängig ist.

6. Anordnung nach einem den vorangehenden Ansprüche, dadurch gekennzeichnet, daß mit zunehmender Breite der Steuerimpulse (S) die Amplitude der Oszillatorschwingungen vergrößert wird.

7. Anordnung nach einem der vorangehenden Ansprüche, dadurch gekennzeichnet, daß mit abnehmender Breite der Steuerimpulse (S) die Amplitude den Oszillator-Schwingungen verkleinert wird.

8. Anordnung nach einem den vorangehenden Ansprüche, dadurch gekennzeichnet, daß die Änderung der Amplitude mit größerer Zeitkonstante erfolgt als die Regelung der Breite den Steuerimpulse.

9. Anordnung nach einem der vorangegangenen Ansprüche, dadurch gekennzeichnet, daß der Meßwert (M) dem Stromkreis der Elektroden (11,13) entnommen wird.

10. Anordnung nach einem den vorangegangenen Ansprüche, dadurch gekennzeichnet, daß ein Teil des Meßwertes (M) von der Speisespannung (3) abgeleitet wird.

11. Anordnung nach einem der vorangegangenen Ansprüche, dadurch gekennzeichnet, daß auf konstante Hochfrequenz-Leistung geregelt wird.

12. Anordnung nach einem den vorangegangenen Ansprüche, dadurch gekennzeichnet, daß die Hochfrequenz-Leistung gemessen und auf konstante Arbeit, d.h Leistung mal Zeit, geregelt wird.

13. Anordnung nach einem den vorangegangenen Ansprüche, dadurch gekennzeichnet, daß die Hochfrequenzspannung an den Elektroden (11,13) den Gasentladungsstrecke (12) gemessen und konstant gehalten wird.

14. Anordnung nach einem der vorangegangenen Ansprüche, dadurch gekennzeichnet, daß die Hochfrequenzspannung an den Elektroden (11,13) der Gasentladungsstrecke (12) gemessen und die Spannungs-Zeit-Fläche den zugeführten Leistungs-Impulse konstant gehalten wird.

15. Anordnung nach Anspruch 14, dadurch gekennzeichnet, daß die Spannungs-Zeit-Fläche den Steuerimpulse (S) nach einer bestimmten Funktion, z.B. nach einer Exponentialfunktion und/oder entsprechend einer Potenz und/oder logarithmisch, verändert wird.

16. Anordnung nach Anspruch 15, dadurch gekennzeichnet, daß die Funktion der Veränderung des Plasmaverhaltens angepaßt ist.

17. Anordnung nach einem der vorangehenden Ansprüche, dadurch gekennzeichnet, daß die Strahlungs-Ausgangsleistung den Gasentladungsstrecke (12) gemessen und durch die Regelung konstant gehalten wird.

18. Anordnung nach einem der vorangegangenen Ansprüche, dadurch gekennzeichnet, daß die Regelung integrierend mit einer bestimmten Zeitkonstante ausgebildet ist.

19. Anordnung nach einem der vorangegangenen Ansprüche, dadurch gekennzeichnet, daß im Bereich jedes Energieimpulses den Meßwert (M) bestimmt wird und die folgenden Energie-Impulse eine Korrektur durch Auswertung dieses Meßwertes (M) erfahren.

20. Anordnung nach einem den vorangegangenen Ansprüche, dadurch gekennzeichnet, daß den Bereich der Regelung durch Änderung den Breite den Steuerimpulse (S) so gewählt ist, daß beim Betrieb mit voller Leistungszufuhr an die Gasentladungsstrecke (12) noch Steuerimpulse (S) mit einen kleinen Austastlücke auftreten.

21. Anordnung nach einem den vorangegangenen Ansprüche, dadurch gekennzeichnet, daß den Oszillator (1) und die Gasentladungsstrecke (11,12,13) in einem gemeinsauren Gehäuse (34) untergebracht und durch, vorzugsweise abgestimmte, Koppelglieder (10) miteinander verbunden sind.

22. Anordnung nach Anspruch 21, dadurch gekennzeichnet, daß das Gehäuse (34) für die Hochfrequenz-Schwingungen undurchlässig und abschirmend ausgebildet ist.

## Claims

1. Gas discharge path assembly, more particularly a gas laser (12), with a power stage constructed in the form of a self-oscillating oscillator (1) which delivers high-frequency electromagnetic vibrational energy in the form of pulses via electrodes (11,13) to the gas discharge path and to which feeding energy is supplied from an operating voltage source (3) which is not maintained constant, whereby the oscillator is put into operation by means of control pulses (S), whose width and, if necessary, frequency, is regulated in dependence upon a measured value (M) determined by the emitted radiation, in which, at the start, each control pulse (S) is superimposed with an additional biasing pulse (Ka) and, at the end, by an additional inhibitory pulse (Kb) and, in connection with the width and, if necessary, the frequency of the control pulse (S), the amplitude of the oscillator vibrations is changed as well.

2. Assembly according to Claim 1, characterized in that the amplitude of the control pulses (S), especially in an amplitude modulator (55), is changed.

3. Assembly according to Claim 2, characterized in that the amplitude of the control pulses is changed with the aid of an adjustment value (57) supplied to the amplitude modulator (55).

4. Assembly according to Claim 3, characterized in that the amplitude of the control pulses (S) is changed with the aid of an amplifier stage (55) transmitting the control pulses, to which the adjustment value (57) is supplied.

5. Assembly according to either Claim 3 or 4, characterized in that the adjustment value (57) depends upon the radiation-dependent measured value (M).

6. Assembly according to any of the preceding claims, characterized in that, with the increasing width of the control pulses (S), the amplitude of the oscillator vibrations is increased.

7. Assembly according to any of the preceding claims, characterized in that, with the decreasing width of the control pulses (S), the amplitude of the oscillator vibrations is decreased.

8. Assembly according to any of the preceding claims, characterized in that the changing of the amplitude takes place with a greater time constant than the regulation of the width of the control pulses (S).

9. Assembly according to any of the preceding claims, characterized in that the measured value (M) is drawn from the circuit of the electrodes (11,13).

10. Assembly according to any of the preceding claims, charecterized in that a part of the measured value (M) is shunted from the supply voltage (3).

11. Assembly according to any of the preceding claims, charecterized in that the regulation is effected to constant high-frequency power.

12. Assembly according to any of the preceding claims, characterized in that the high-frequency power is measured and regulated to constant operation, i.e. power times time.

13. Assembly according to any of the preceding claims, charecterized in that the high-frequency voltage is measured (12) and maintained constant at the electrodes (11,13) of the gas discharge path (12).

14. Assembly according to any of the preceding claims, characterized in that the high-frequency voltage is measured at the electrodes (11,13) of the gas discharge path (12) and in that the voltage-time-area of the power pulses supplied is maintained constant.

15. Assembly according to Claim 14, characterized in that the voltage-time-area of the control pulses (S) is changed according to a specific function, e.g. subsequent to an exponential function and/or according to a power and/on logarithmically.

16. Assembly according to Claim 15, characterized in that the function of the change is adapted to the plasma behaviour.

17. Assembly according to any of the preceding claims, characterized in that the radiation output power of the gas discharge path (12) is measured and maintained constant by the regulation.

18. Assembly according to any of the preceding claims, characterized in that the regulation is designed so as to be integrating with a specific time constant.

19. Assembly according to any of the preceding claims, characterized in that the measured value (M) is determined within the range of each energy pulse and in that the subsequent energy pulses are subjected to a correction by the evaluation of this measured value.

20. Assembly according to any of the preceding claims, characterized in that the range of the regulation is selected in such a way by changing the width of the control pulses (S) that, when operating with a full power supply to the gas discharge path (12), control pulses (S) having a small gating gap still do occur.

21. Assembly according to any of the preceding claims, characterized in that the oscillator (1) and the gas discharge path (11,12,13) are accommodated within a common housing (34) and are interconnected by preferably tuned coupling members (10).

22. Assembly according to Claim 21, characterized in that the housing (34) is constructed so as to be impervious to and screening or shielding against the high-frequency vibrations.

## Revendications

1. Dispositif de voie de décharge de gaz, en particulier laser à gaz avec un étage de puissance configuré comme un oscillateur auto-hétérodyne (1) qui fournit une énergie d'oscillation électromagnétique à haute fréquence en forme d'impulsions à la voie de décharge de gaz par l'intermédiaire d'électrodes (11, 13) et auquel de l'énergie d'alimentation est amenée par une source de tension de fonctionnement (3) qui n'est pas maintenue constante, l'oscillateur étant mis en service par des impulsions de commande (S) dont la largeur et, le cas échéant, la fréquence est réglée en fonction d'une valeur de mesure (M) déterminée par le rayonnement émis, une impulsion supplémentaire de montée d'excitation (Ka) étant superposée au début de chaque impulsion de commande (S) et une impulsion de blocage (Kb) supplémentaire étant superposée à la fin et l'amplitude des oscillations de l'oscillateur étant variée aussi en relation avec la largeur et, le cas échéant, la fréquence des impulsions de commande (S).

2. Dispositif selon la revendication 1, **caractérisé en ce** que l'amplitude des impulsions de commande (S) est variée en particulier dans un modulateur d'amplitude (55).

3. Dispositif selon la revendication 2, **caractérisé en ce** que l'amplitude des impulsions de commande est variée au moyen d'une valeur de réglage (57) amenée au modulateur d'amplitude (55).

4. Dispositif selon la revendication 3, **caractérisé en ce** que l'amplitude des impulsions de commande (S) est variée au moyen d'un étage amplificateur (55) qui transmet les impulsions de commande, étage auquel la valeur de réglage (57) est amenée,

5. Dispositif selon la revendication 3 ou 4, **caractérisé en ce** que la valeur de réglage (57) est fonction de la valeur de mesure (M) qui dépend du rayonnement.

6. Dispositif selon l'une des revendications précédentes, **caractérisé en ce** que l'amplitude des oscillations de l'oscillateur augmente plus la largeur des impulsions de commande (S) augmente.

7. Dispositif selon l'une des revendications précédentes, **caractérisé en ce** que l'amplitude des oscillations de l'oscillateur diminue plus la largeur des impulsions de commande (S) diminue.

8. Dispositif selon l'une des revendications précédentes, **caractérisé en ce** que la variation de l'amplitude se fait avec une constante de temps plus grande que le réglage de la largeur des impulsions de commande.

9. Dispositif selon l'une des revendications précédentes, **caractérisé en ce** que la valeur de mesure (M) est prélevée sur le circuit des électrodes (11, 13).

10. Dispositif selon l'une des revendications précédentes, **caractérisé en ce** qu'une partie de la valeur de mesure (M) est dérivée de la tension d'alimentation (3).

11. Dispositif selon l'une des revendications précédentes. **caractérisé en ce** que le réglage est fait sur une puissance haute fréquence constante.

12. Dispositif selon l'une des revendications précédentes. **caractérisé en ce** que la puissance haute fréquence est mesurée et réglée sur travail constant, c'est-à-dire puissance par temps.

13. Dispositif selon l'une des revendications précédentes, **caractérisé en ce** que la tension haute fréquence est mesurée sur les électrodes (11, 13) de la voie de décharge du gaz (12) et maintenue constante.

14. Dispositif selon l'une des revendications précédentes, **caractérisé en ce** que la tension haute fréquence est mesurée sur les électrodes (11, 13) de la voie de décharge de gaz (12) et la surface tension-temps des impulsions de puissance amenées est maintenue constante.

15. Dispositif selon la revendication 14, **caractérisé en ce** que la surface tension-temps des impulsions de commande (S) est variée selon une certaine fonction, par exemple selon une fonction exponentielle et/ou selon une puissance et/ou logarithmiquement.

16. Dispositif selon la revendication 15, **caractérisé en ce** que la fonction est adaptée à la variation du comportement du plasma.

17. Dispositif selon l'une des revendications précédentes, **caractérisé en ce** que la puissance de sortie du rayonnement de la voie de décharge de gaz (12) est mesurée et maintenue constante par le réglage.

18. Dispositif selon l'une des revendications précédentes, **caractérisé en ce** que le réglage est configuré en étant intégrant avec une certaine constante de temps.

19. Dispositif selon l'une des revendications précédentes, **caractérisé en ce** que la valeur de mesure (M) est déterminée dans la plage de chaque impulsion d'énergie et que les impulsions d'énergie suivantes éprouvent une correction par exploitation de cette valeur de mesure (M).

20. Dispositif selon l'une des revendications précédentes, **caractérisé en ce** que la plage de réglage est sélectionnée en faisant varier la largeur des impulsions de commande (S) de telle manière que lors du fonctionnement avec l'amenée de la pleine puissance à la voie de décharge de gaz (12) il apparaît encore des impulsions de commande (S) avec un petit intervalle de suppression.

21. Dispositif selon l'une des revendications précédentes, **caractérisé en ce** que l'oscillateur (1) et la voie de décharge du gaz (11, 12, 13) sont logés dans un boîtier commun (34) et sont reliés l'un à l'autre par des éléments de couplage (10) de préférence accordés.

22. Dispositif selon la revendication 21, **caractérisé en ce** que le boîtier (34) est configuré en étant imperméable aux oscillations haute fréquence et en ayant un effet de blindage contre celles-ci.
